# EUROPEAN PATENT APPLICATION

(11) **EP 2 189 913 A1**
(43) Date of publication of application: **26.05.2010**
(21) Application number: 08168771.7
(22) Date of filing: 10.11.2008
(51) Int. Cl.: G06F 13/42

(54) **Cascade sequential bus structure**

(71) Applicant: Powertip Technology Corp., Taichung (TW)
(72) Inventor: Chen, Chia-Hui, Houli Shiang Taichung Country (TW); Huang, Chiu-Yuan, Xitun District Taichung City (TW); Chien, Chun-Tsai, Nantun District Taichung City (TW)
(74) Representative: 2K Patentanwälte Blasberg Kewitz & Reichel

(57) **Abstract**

An image data bus (20) comprises an input port (21), an output port (22), and an image register (23) with two ends thereof respectively coupled to the output port (22) and the input port (21). The image register (23) connects with an LCD driver (10). A plurality of image data buses (20) is cascaded via using a plurality of cascading signal cables (15) to connect the output ports (22) and the input ports (21) of the image data buses (20). Image data is sequentially transposed in a first-in-first-out way and transferred from the output port (22) of the front-stage image data bus (20) to the input port (21) of the rear-stage image data bus (20). The present invention can facilitate flexibly constructing different-size assembled LCD billboards. Further, the present invention can reduce the cables used in wiring an assembled LCD billboard and effectively lower material cost thereof.

## Description

### FIELD OF THE INVENTION

The present invention relates to an image bus structure for an LCD system, particularly to an image bus structure for an assembled LCD billboard.

### BACKGROUND OF THE INVENTION

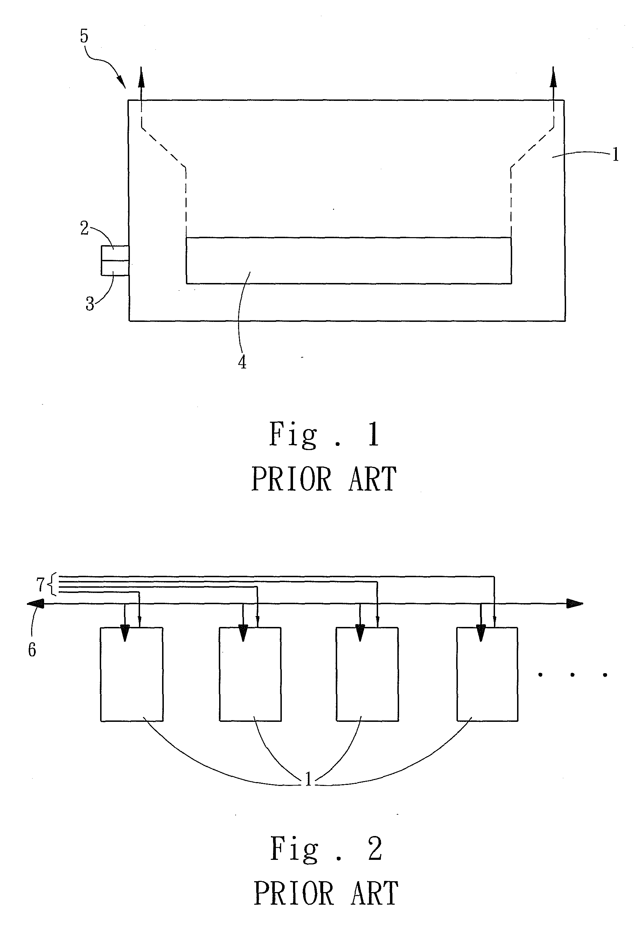

Refer to Fig.1 and Fig.2. In a conventional assembled LCD (Liquid Crystal Display) billboard using parallel buses, the drivers are parallel connected. Each LCD player has an LCD driver 1. The LCD driver 1 is connected to an image data bus 2, a control bus 3 and an image register 4, and the LCD driver 1 sends out image signals via a display signal cable 5. The image data bus 2 and the control bus 3 respectively output the required image information and enable signals to the image register 4, and then the LCD drivers 1 drive the assembled LCD billboard to present the images via the display signal cables 5. Refer to Fig.2. Each LCD driver 1 needs a signal cable 6 and an enable signal cable 7 to connect with the image data bus 2 and the control bus 3. Therefore, the wiring cables of the conventional assembled LCD not only increase the material cost and the output load but also inconvenience flexibly varying the dimensions of the assembled LCD billboard.

### SUMMARY OF THE INVENTION

The primary objective of the present invention is to decrease the cables used in wiring an assembled LCD billboard and facilitate flexibly constructing different-size assembled LCD billboards.

The present invention proposes a cascade sequential bus structure used to provide required image data for an assembled LCD billboard. The assembled LCD billboard comprises a plurality of LCD drivers. The cascade sequential bus structure of the present invention comprises a plurality of image data buses corresponding to the plurality of LCD drivers. The image data bus includes an one-way output port, an one-way input port, and an one-way image register with two ends thereof respectively coupled to the output port and the input port. The image register connects with the LCD driver. The plurality of image data buses is cascaded via using a plurality of cascading signal cables to connect the output port of one image data bus to the input port of another image data bus.

After the input port receives image data from the preceding stage, the image data is transmitted to the LCD driver and the output port via the image register. The image data is sequentially transposed in a first-in-first-out way from the output port of a front-stage image data bus to the input port of a rear-stage image data bus. The successive transposition of image data makes all the image data buses able to receive the image data.

### BRIEF DESCRIPTION OF THE DRAWINGS

- Fig.1: is a diagram schematically showing the conventional control structure of an assembled LCD billboard;
- Fig.2: is a diagram schematically showing the conventional control signal connection of a conventional assembled LCD billboard;
- Fig.3: is a diagram schematically showing an image data bus according to one embodiment of the present invention;
- Fig.4: is a diagram schematically showing the control signal connection of an assembled LCD billboard according to one embodiment of the present invention;
- Fig.5: is a diagram schematically showing an image data bus according to another embodiment of the present invention; and
- Fig.6: is a diagram schematically showing the control signal connection of an assembled LCD billboard according to another embodiment of the present invention.

### DETAILED DESCRIPTION OF THE PREFERRED EMBODIMENTS

Below, the technical contents of the present invention are described in detail in cooperation with the drawings.

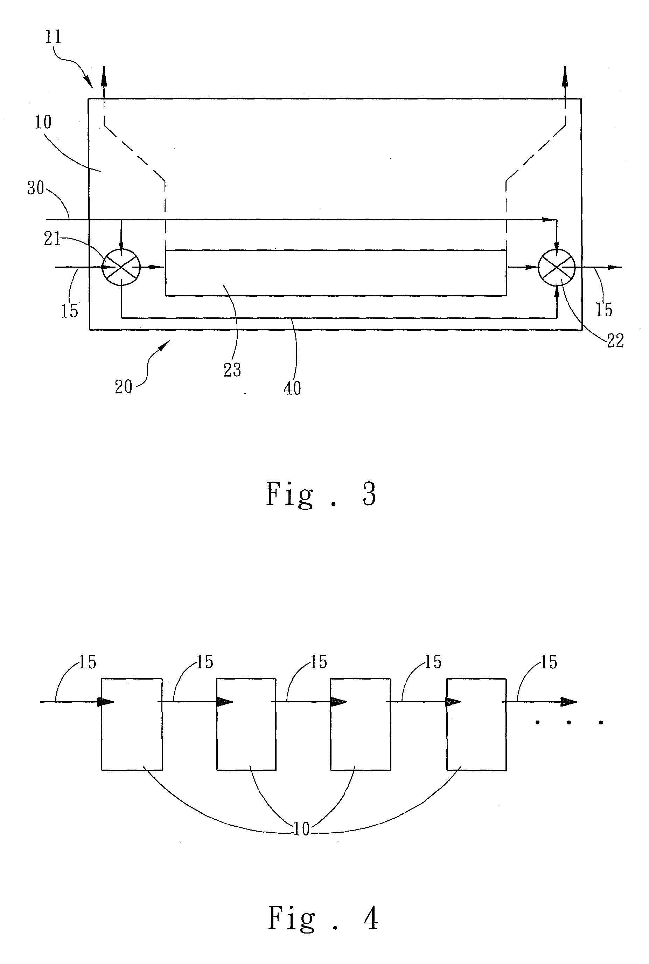

Refer to Fig.3 and Fig.4. The present invention discloses a cascade sequential bus structure used to provide required image data for an assembled LCD billboard (not shown in the drawings). The assembled LCD billboard comprises a plurality of LCD drivers 10. The LCD drivers 10 provide images for the assembled LCD billboard via display signal cables 11.

The cascade sequential bus structure of the present invention comprises a plurality of image data buses 20 each corresponding to one LCD driver 10. Each image data bus 20 provides image data for the LCD driver 10 connected thereto. Each image data bus 20 includes an one-way input port 21, an one-way output port 22, and an one-way image register 23 with two ends thereof respectively coupled to the output port 22 and the input port 21. The image register 23 connects with the LCD driver 10. The plurality of image data buses 20 is cascaded via using a plurality of cascading signal cables 15 to connect the output port 22 of one image data bus 20 to the input port 21 of another image data bus 20.

The present invention also has a plurality of enable signal cables 30 providing enable signals. The enable signal cables 30 are respectively connected to the input ports 21 and the output ports 22 of the image data buses 20. After the input port 21 receives image data and when the enable signal cable 30 provides the enable signal, the image data will be transmitted to the LCD driver 10 via the image register 23, wherein the latest piece of image data is stored into the image register 23, and the first piece of image data is pushed out of the image register 23 to the output port 22. In other words, the image data is sequentially transposed in a first-in-first-out way, whereby the image data is transferred from the output port 22 of the front-stage image data bus 20 to the input port 21 of the rear-stage image data bus 20.

The image data bus 20 also has a signal transmission cable 40. The signal transmission cable 40 connects the input port 21 and the output port 22. When the enable signal cable 30 does not provide the enable signal, the signal transmission cable 40 can directly transmit an identical piece of image data from the input port 21 to the output port 22. Thereby, the identical image data can be transmitted faster, and the picture of the assembled LCD billboard cab be reset rapidly. Further, the image data bus 20 may also have a control-data register (not shown in the drawings) providing the enable signal.

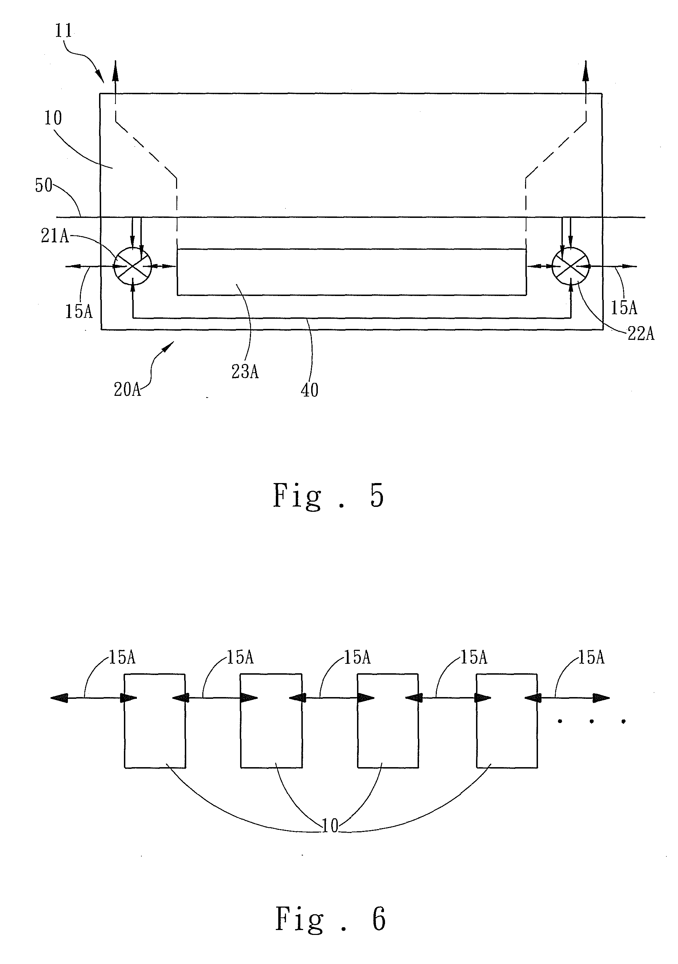

Refer to Fig.5 and Fig.6. The present invention may also have a plurality of directional signal cables 50 providing directional signals. The directional signal cables 50 are respectively connected to the input ports 21A and the output ports 22A of the image data buses 20A. In this embodiment, the input port 21A, output port 22A, image register 23A and cascading signal cable 15A of the image data bus 20A are all two-way elements, and the directional signal cable 50 provides the directional signal to control the transmission direction of image data. Further, the image data bus 20A may also have a control-data register (not shown in the drawings) providing the directional signal.

As described above, the present invention transmits the image data to all the image data buses 20 with a transposition method. Each LCD driver 10 selects the corresponding portion of the image data to play, and all the LCD drivers 10 cooperate to present the whole image. The present invention can facilitate flexibly constructing different-size assembled LCD billboards. Further, the present invention can simplify the wiring of an assembled LCD billboard, greatly reduce the cables used in an assembled LCD billboard, and effectively lower the fabrication cost thereof.

## Claims

1. A cascade sequential bus structure, used to provide required image data for an assembled LCD (Liquid Crystal Display) billboard having a plurality of LCD drivers (10), **characterized by**
a plurality of image data buses (20) each corresponding to one said LCD driver (10), each including an one-way input port (21), an one-way output port (22), and an one-way image register (23) with two ends thereof respectively coupled to said output port (22) and said input port (21), wherein said image register (23) connects with said LCD driver (10), and wherein the plurality of said image data buses (20) is cascaded via using a plurality of cascading signal cables (15) to connect said output port (22) of one said image data bus (20) to said input port (21) of another said image data bus (20).

2. The cascade sequential bus structure according to claim 1 further comprising a plurality of enable signal cables (30) providing enable signals and respectively connected to said input ports (21) and said output ports (22) of said image data buses (20), wherein after said input port (21) receives image data and when said enable signal cable (30) provides said enable signal, image data will be transmitted to said LCD driver (10) via said image register (23), and wherein image data is sequentially transposed in a first-in-first-out way, and wherein the latest piece of image data is stored into said image register (23), and the first piece of image data is pushed out of said image register (23) to said output port (22), whereby image data is transferred from one said output port (22) of a front-stage said image data bus (20) to one said input port (21) of a rear-stage said image data bus (20).

3. The cascade sequential bus structure according to claim 2, wherein said image data bus (20) also has a signal transmission cable (40) connecting said input port (21) and said output port (22); when said enable signal cable (30) does not provide said enable signal, said signal transmission cable (40) can directly and instantly transmit an identical piece of image data from said input port (21) to said output port (22).

4. The cascade sequential bus structure according to claim 2, wherein said image data bus (20) has a control-data register providing said enable signal.

5. The cascade sequential bus structure according to claim 2 further comprising a plurality of directional signal cables (50) providing directional signals and respectively connected said input ports (21A) and said output ports (22A) of said image data buses (20A), wherein said input port (21A), said output port (22A), said image register (23A) and said cascading signal cable (15A) of said image data bus (20A) are all two-way elements, and said directional signal cable (50) provides said directional signal to control the transmission direction of image data.

6. The cascade sequential bus structure according to claim 5, wherein said image data bus (20A) has a control-data register providing said directional signal.

7. An image data bus, coupled to a liquid crystal display (LCD) driver (10), **characterized by**
an one-way input port (21);
an one-way output port (22); and
an one-way image register (23) connecting to said LCD driver (10) with two ends thereof respectively coupled to said output port (22) and said input port (21).

8. The image data bus according to claim 7 further comprising two enable signal cables (30) providing enable signals and respectively connected to said input port (21) and said output port (22), wherein after said input port (21) receives image data and when said enable signal cable (30) provides said enable signal, image data is transmitted to said LCD driver (10) via said image register (23), and wherein image data is sequentially transposed in a first-in-first-out way, and wherein the latest piece of image data is stored into said image register (23), and the first piece of image data is pushed out of said image register (23) to said output port (22).

9. The image data bus according to claim 8 further comprising a signal transmission cable (40) connecting said input port (21) and said output port (22); when said enable signal cable (30) does not provide said enable signal, said signal transmission cable (40) can directly and instantly transmit an identical piece of image data from said input port (21) to said output port (22).

10. The image data bus according to claim 8, wherein said image data bus (20) has a control-data register providing said enable signal.

11. The image data bus according to claim 8 further comprising two directional signal cables (50) providing directional signals and respectively connected to said input port (21A) and said output port (22A) of said image data bus (20A), wherein said input port (21A), said output port (22A) and said image register (23A) of said image data bus (20A) are all two-way elements, and said directional signal cables (50) provides said directional signal to control the transmission direction of image data.

12. The image data bus according to claim 11, wherein said image data bus (20A) has a control-data register providing said directional signal.

## Amended claims

### Amended claims in accordance with Rule 137(2) EPC.

**1.** A cascade sequential bus structure, used to provide required image data for an assembled LCD (Liquid Crystal Display) billboard having a plurality of LCD drivers (10), **characterized by**
a plurality of image data buses (20) each corresponding to one said LCD driver (10), each including an one-way input port (21), an one-way output port (22), and an one-way image register (23) with two ends thereof respectively coupled to said output port (22) and said input port (21), wherein said image register (23) connects with said LCD driver (10), and wherein the plurality of said image data buses (20) is cascaded via using a plurality of cascading signal cables (15) to connect said output port (22) of one said image data bus (20) to said input port (21) of another said image data bus (20);
further comprising a plurality of enable signal cables (30) providing enable signals and respectively connected to said input ports (21) and said output ports (22) of said image data buses (20), wherein after said input port (21) receives image data and when said enable signal cable (30) provides said enable signal, image data will be transmitted to said LCD driver (10) via said image register (23), and wherein image data is sequentially transposed in a first-in-first-out way, and wherein the latest piece of image data is stored into said image register (23), and the first piece of image data is pushed out of said image register (23) to said output port (22), whereby image data is transferred from one said output port (22) of a front-stage said image data bus (20) to one said input port (21) of a rear-stage said image data bus (20).

**2.** The cascade sequential bus structure according to claim 1, wherein said image data bus (20) also has a signal transmission cable (40) connecting said input port (21) and said output port (22); when said enable signal cable (30) does not provide said enable signal, said signal transmission cable (40) can directly and instantly transmit an identical piece of image data from said input port (21) to said output port (22).

**3.** The cascade sequential bus structure according to claim 1, wherein said image data bus (20) has a control-data register providing said enable signal.

**4.** The cascade sequential bus structure according to claim 1 further comprising a plurality of directional signal cables (50) providing directional signals and respectively connected said input ports (21A) and said output ports (22A) of said image data buses (20A), wherein said input port (21A), said output port (22A), said image register (23A) and said cascading signal cable (15A) of said image data bus (20A) are all two-way elements, and said directional signal cable (50) provides said directional signal to control the transmission direction of image data.

**5.** The cascade sequential bus structure according to claim 4, wherein said image data bus (20A) has a control-data register providing said directional signal.
